# EUROPEAN PATENT SPECIFICATION

(11) **EP 3 448 088 B1**
(45) Date of publication and mention of the grant of the patent: **22.04.2020**
(21) Application number: 16904359.3
(22) Date of filing: 08.06.2016
(51) Int. Cl.: H04W 36/18, H04B 7/024, H04W 36/08, H04W 24/10

(54) **MULTILINK CONFIGURATION METHOD AND BASE STATION**
MULTILINK-KONFIGURATIONSVERFAHREN AND BASISSTATION
PROCÉDÉ DE CONFIGURATION DE LIAISONS MULTIPLES ET STATION DE BASE

(43) Date of publication of application: 27.02.2019
(73) Proprietor: Huawei Technologies Co., Ltd., Longgang District Shenzhen, Guangdong 518129 (CN)
(72) Inventor: ZHANG, Lili, Shenzhen Guangdong 518129 (CN); XU, Kai, Shenzhen Guangdong 518129 (CN); LI, Xiaocui, Shenzhen Guangdong 518129 (CN)
(74) Representative: Pfenning, Meinig & Partner mbB
(86) International application number: PCT/CN2016/085350
(87) International publication number: WO 2017/210907

(56) References cited:
- WO-A1-2013/020497
- WO-A1-2016/036111
- WO-A2-2012/151063
- CN-A- 102 638 297
- CN-A- 104 053 240
- CN-A- 105 376 748
- HUAWEI ET AL: "Considerations on New Radio Operation for Ultra Dense Networks", 3GPP DRAFT; R1-162164, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080010, Retrieved from the Internet: URL:http://www.3gpp.org/ftp/tsg_ran/WG1_RL 1/TSGR1_84b/Docs/ [retrieved on 2016-04-02]
- INTEL CORPORATION: "Downlink control signaling for DL CoMP", 3GPP DRAFT; R1-122629 DOWNLINK CONTROL SIGNALING FOR DL COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech; 20120521 - 20120525, 12 May 2012 (2012-05-12), XP050600814, [retrieved on 2012-05-12]
- INTEL CORPORATION: "Downlink control signaling for DL CoMP", 3GPP DRAFT; R1-121517 DL COMP CONTROL SIGNALLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599790, [retrieved on 2012-03-20]

## Description

### TECHNICAL FIELD

Embodiments of the present invention relate to the field of communications technologies, and in particular, to a multi-link configuration method, a base station, and user equipment.

### BACKGROUND

An ultra-dense network (Ultra-Dense Network, UDN) is an important technology of the 5th Generation Mobile Communication (the 5th Generation Mobile Communication, 5G). The UDN refers to ultra-dense networking performed, during network deployment, in a hot spot area (such as a stadium, a railway station waiting hall, or an office) that requires a large amount of data and has a large quantity of data connections. In other words, small cells are deployed on a large scale in these hot spot areas, and a distance between adjacent small cells may be only tens of meters.

In the UDN, because the small cell has a small coverage area, frequent handover is caused even if user equipment (User Equipment, UE) moves at a low or medium speed. The handover not only increases signaling overheads of an air interface, but also causes data interruption. Therefore, how to resolve a problem of frequent handover of UE in a UDN network is an urgent problem to be resolved in the industry.

WO 2016/036111 A1 describes a base station which obtains measurement information from a user terminal, and determines a cell-edge user, transmits information of the cell-edge user in the cell, receives information of a cell-edge user in an adjacent cell; according to the information of cell-edge users in the cell and the adjacent cell, establishes a virtual cell including the cell-edge users, transmits configuration information of the cell-edge user in the cell and configuration information of the cell to base stations each of which a cell-edge user in the virtual cell is located at, and receives configuration information of each cell-edge user and configuration information of a cell where the each cell-edge user is located from a base station where the each cell-edge user is located, and configures uplink-downlink resources and a transmission mode for the virtual cell.

Further prior art useful for understanding the current invention is described in HUAWEI et al.: Considerations on New Radio Operation for Ultra Dense Networks; 3GPP DRAFT; R1-162164, vol. RAN WG1, no. BUSAN, KOREAN; 2 April 2016; in INTEL CORP.: Downlink Control Signaling for DL CoMP; 3GPP DRAFT; R1-122629, vol. RAN WG1, no. Prague, Czech, 12 May 2012; and INTEL CORP.: Downlink Control Signaling for DL CoMP; 3GPP DRAFT; R1-121517, vol. RAN WG1, no. Jeju, Korea, 20 March 2012.

### SUMMARY

Embodiments of the present invention provide a multi-link configuration method, a base station, and user equipment, to resolve a problem of frequent handover of UE in a UDN network by configuring a plurality of links for the user equipment.

According to an aspect, an embodiment of the present invention provides a multi-link configuration method according to claim 1. The method is described from the perspective of a base station. In this method, a base station particularly receives uplink information generated and sent by UE, and configures a first set and/or a second set for the UE based on the uplink information. When the first set or the second set is configured, a plurality of links are established between transmission points included in the first set or the second set and the UE. When the first set and the second set are configured, the first set includes at least two transmission points, and the second set is a subset of the first set. In this process, the transmission point included in the first set is a candidate transmission point, and the transmission point included in the second set establishes a plurality of links to a user, and is a transmission point that actually transmits data to the UE. When a signal of the transmission point included in the second set is weak or interrupted, a transmission point with good quality is selected from the first set and added to the second set to reduce a quantity of times of link interruption and service interruption, thereby resolving a problem of frequent handover of the UE in a UDN network.

A transmission point in the first set is a transmission point whose measured signal strength is greater than or equal to a first threshold, a transmission point in the second set is a transmission point whose measured signal strength is greater than or equal to a second threshold, and the second threshold is greater than the first threshold.

Each transmission point included in the second set may be activated or deactivated from the first set.

When the transmission point included in the second set does not meet the second threshold, a transmission point that is in the first set and outside the second set and that meets the second threshold is added to the second set.

The uplink information is a downlink measurement result that is in at least one downlink measurement result and that is greater than the first threshold or the second threshold, and the at least one downlink measurement result is obtained by the UE by measuring a downlink signal of at least one transmission point.

Or, the at least one downlink measurement result is obtained by the UE by performing RRM measurement on the downlink signal of the at least one transmission point.

Or, the uplink information is at least one transmission point identifier, and the at least one transmission point identifier is a transmission point identifier corresponding to a downlink measurement result that is greater than the first threshold or the second threshold and that is in at least one downlink measurement result obtained by the UE by measuring a downlink signal of at least one transmission point.

Or, the uplink information is specifically an uplink signal sent by the UE, and the uplink signal is at least one of the following signals: an uplink sounding signal, an uplink sounding reference signal, an uplink sequence code, or a preamble.

In a possible implementation, before the receiving, by a base station, uplink information sent by user equipment UE, the method further includes:
notifying, by the base station, an uplink transmission subframe or an uplink transmission subframe set of the uplink signal by using radio resource control RRC signaling.

In a possible implementation, before the notifying, by the base station, an uplink transmission subframe or an uplink transmission subframe set of the uplink signal by using RRC signaling, the method further includes:
coordinating or preconfiguring, by the base station, the uplink transmission subframe or the uplink transmission subframe set by using an inter-base station interface.

In a possible implementation, the transmission point included in the first set constitutes a first cell, and the first cell is a first cluster, a first virtual cell, or a first super cell.

In a possible implementation, a primary transmission point included in the first cell is fixed or variable.

In a possible implementation, the first cell has a corresponding cell identifier, and when the first cell is the first cluster, the first virtual cell, or the first super cell, the cell identifier corresponding to the first cell is a cluster identifier, a virtual cell identifier, or a super cell identifier.

In a possible implementation, the transmission point included in the second set constitutes a second cell, and the second cell is a second cluster, a second virtual cell, or a second super cell.

In a possible implementation, a primary transmission point included in the second cell changes with a movement of the UE.

In a possible implementation, the second cell has a corresponding cell identifier, and when the second cell is the second cluster, the second virtual cell, or the second super cell, the cell identifier corresponding to the second cell is a cluster identifier, a virtual cell identifier, or a super cell identifier.

In a possible implementation, the second set is in a multi-RRC link mode, and at least two transmission points in the second set establish RRC links to the UE; or the second set is in a single-RRC link mode, and one transmission point in the second set establishes an RRC link to the UE; or the second set is in a semi-static mode, and the transmission point in the second set changes in the first set in a semi-static manner.

In a possible implementation, before the receiving, by a base station, uplink information sent by user equipment UE, the method further includes:
sending, by the base station, the first threshold or the second threshold to the UE by using configuration signaling.

In a possible implementation, the receiving, by a base station, uplink information sent by user equipment UE includes:
receiving, by the base station, uplink information that is sent by the user equipment UE and that is of a transmission point that meets the first threshold or the second threshold.

In a possible implementation, after the configuring, by the base station, a first set and/or a second set for the UE based on the uplink information, the method further includes:
sending, by the base station, information about the first set and/or the second set to the UE by using radio resource control RRC signaling; and/or
sending, by the base station, activation or deactivation information of the second set to the UE by using Media Access Control MAC signaling.

In a possible implementation, the base station sends multi-link configuration information to the UE by using RRC signaling, to instruct the UE to perform multi-link collaboration.

In a possible implementation, the multi-link collaboration includes at least one of the following collaboration: power collaboration, random access collaboration, and power headroom collaboration.

In a possible implementation, when an inactive link in the plurality of links is activated, the base station triggers, by using Media Access Control MAC signaling on a previously activated link, the currently activated link to perform uplink transmission, where the uplink transmission includes at least one of the following transmission: random access transmission, scheduling requirement transmission, sounding reference signal transmission, and buffer status report transmission.

In a possible implementation, the base station is specifically a macro base station macro eNB or a master node master node, and the transmission point is a small cell.

According to another aspect, another multi-link configuration method is described. The other method is described from the perspective of user equipment. In this other method, UE generates uplink information and sends the uplink information to a base station. The base station configures a first set and/or a second set for the UE based on the uplink information. When the first set or the second set is configured, a plurality of links are established between transmission points included in the first set or the second set and the UE. When the first set and the second set are configured, the first set includes at least two transmission points, and the second set is a subset of the first set. In this process, the transmission point included in the first set is a candidate transmission point, and the transmission point included in the second set establishes a plurality of links to a user, and is a transmission point that actually transmits data to the UE. When a signal of the transmission point included in the second set is weak or interrupted, a transmission point with good quality is selected from the first set and added to the second set to reduce a quantity of times of link interruption and service interruption, thereby resolving a problem of frequent handover of the UE in a UDN network.

In a possible implementation, a transmission point in the first set is a transmission point whose measured signal strength is greater than or equal to a first threshold, a transmission point in the second set is a transmission point whose measured signal strength is greater than or equal to a second threshold, and the second threshold is greater than the first threshold.

In a possible implementation, each transmission point included in the second set may be activated or deactivated from the first set.

In a possible implementation, when the transmission point included in the second set does not meet the second threshold, a transmission point that is in the first set and outside the second set and that meets the second threshold is added to the second set.

In a possible implementation, the uplink information includes a downlink measurement result greater than the first threshold or the second threshold; and
the generating, by user equipment UE, uplink information includes:
measuring, by the UE, a downlink signal of at least one transmission point to obtain at least one downlink measurement result; and
determining, by the UE from the at least one downlink measurement result, the downlink measurement result greater than the first threshold or the second threshold.

In a possible implementation, the measuring, by the UE, a downlink signal of at least one transmission point to obtain at least one downlink measurement result includes:
performing, by the UE, RRM measurement on downlink reference information of the at least one transmission point to obtain the at least one downlink measurement result.

In a possible implementation, the uplink information includes a transmission point identifier corresponding to a downlink measurement result greater than the first threshold or the second threshold; and
the generating, by user equipment UE, uplink information includes:
measuring, by the UE, a downlink signal of at least one transmission point to obtain at least one downlink measurement result; and
determining, by the UE from the at least one downlink measurement result, the transmission point identifier corresponding to the downlink measurement result greater than the first threshold or the second threshold.

In a possible implementation, the uplink information is obtained by the UE by sorting, in ascending order or descending order, the transmission point identifier corresponding to the downlink measurement result greater than the first threshold or the second threshold.

In a possible implementation, the uplink information is specifically an uplink signal sent by the UE, and the uplink signal is at least one of the following signals: an uplink sounding signal, an uplink sounding reference signal, an uplink sequence code, or a preamble.

In a possible implementation, before the sending, by the UE, the uplink information to a base station, the method further includes:
receiving, by the UE, an uplink transmission subframe or an uplink transmission subframe set that is of the uplink signal and that is notified by the base station by using radio resource control RRC signaling.

In a possible implementation, the uplink transmission subframe or the uplink transmission subframe set is coordinated or preconfigured by the base station by using an inter-base station interface.

In a possible implementation, a coverage area of the transmission point included in the first set constitutes a first cell, and the first cell is a first cluster, a first virtual cell, or a first super cell.

In a possible implementation, a primary transmission point included in the first cell is fixed or variable.

In a possible implementation, the first cell has a corresponding cell identifier, and when the first cell is the first cluster, the first virtual cell, or the first super cell, the cell identifier corresponding to the first cell is a cluster identifier, a virtual cell identifier, or a super cell identifier.

In a possible implementation, a coverage area of the transmission point included in the second set constitutes a second cell, and the second cell is a second cluster, a second virtual cell, or a second super cell.

In a possible implementation, a primary transmission point included in the second cell changes with a movement of the UE.

In a possible implementation, the second cell has a corresponding cell identifier, and when the second cell is the second cluster, the second virtual cell, or the second super cell, the cell identifier corresponding to the second cell is a cluster identifier, a virtual cell identifier, or a super cell identifier.

In a possible implementation, the second set is in a multi-RRC link mode, and at least two transmission points in the second set establish RRC links to the UE; or
the second set is in a single-RRC link mode, and one transmission point in the second set establishes an RRC link to the UE; or
the second set is in a semi-static mode, and the transmission point in the second set changes in the first set in a semi-static manner.

In a possible implementation, before the sending, by the user equipment UE, the uplink information to a base station, the method further includes:
receiving, by the UE, the first threshold or the second threshold sent by the base station by using configuration signaling.

In a possible implementation, the sending, by the user equipment UE, the uplink information to a base station includes:
sending, by the UE, uplink information of a transmission point that meets the first threshold or the second threshold to the base station.

In a possible implementation, after the sending, by the user equipment UE, the uplink information to a base station, the method further includes:
receiving, by the UE, information that is about the first set and/or the second set and that is sent by the base station by using radio resource control RRC signaling; and/or
receiving, by the UE, activation or deactivation information that is of the second set and that is sent by the base station to the UE by using Media Access Control MAC signaling.

In a possible implementation, the UE receives multi-link configuration information sent by the base station by using RRC signaling, to perform multi-link collaboration.

In a possible implementation, the multi-link collaboration includes at least one of the following collaboration: power collaboration, random access collaboration, and power headroom collaboration.

According to another aspect, an embodiment of the present invention provides a base station according to claim 6, particularly including:
a transceiver module, configured to receive uplink information sent by user equipment UE; and
a processing module, configured to configure a first set and/or a second set for the UE based on the uplink information, and when the first set or the second set is configured, establish a plurality of links between transmission points included in the first set or the second set and the UE, where when the first set and the second set are configured, the first set includes at least two transmission points, and the second set is a subset of the first set.

A transmission point in the first set is a transmission point whose measured signal strength is greater than or equal to a first threshold, a transmission point in the second set is a transmission point whose measured signal strength is greater than or equal to a second threshold, and the second threshold is greater than the first threshold.

Each transmission point included in the second set may be activated or deactivated from the first set.

The processing module is further configured to: when the transmission point included in the second set does not meet the second threshold, add a transmission point that is in the first set and outside the second set and that meets the second threshold to the second set.

The uplink information is a downlink measurement result that is in at least one downlink measurement result and that is greater than the first threshold or the second threshold, and the at least one downlink measurement result is obtained by the UE by measuring a downlink signal of at least one transmission point.

Or, the at least one downlink measurement result is obtained by the UE by performing RRM measurement on the downlink signal of the at least one transmission point.

Or, the uplink information is at least one transmission point identifier, and the at least one transmission point identifier is a transmission point identifier corresponding to a downlink measurement result that is greater than the first threshold or the second threshold and that is in at least one downlink measurement result obtained by the UE by measuring a downlink signal of at least one transmission point.

Or, the uplink information is specifically an uplink signal sent by the UE, and the uplink signal is at least one of the following signals: an uplink sounding signal, an uplink sounding reference signal, an uplink sequence code, or a preamble.

In a possible implementation, before receiving the uplink information sent by the user equipment UE, the transceiver module is further configured to notify an uplink transmission subframe or an uplink transmission subframe set of the uplink signal by using radio resource control RRC signaling.

In a possible implementation, after the processing module configures the first set and/or the second set for the UE based on the uplink information, the transceiver module is further configured to: send information about the first set and/or the second set to the UE by using radio resource control RRC signaling; and/or send activation or deactivation information of the second set to the UE by using Media Access Control MAC signaling.

In a possible implementation, the transceiver module is further configured to send multi-link configuration information to the UE by using RRC signaling, to instruct the UE to perform multi-link collaboration.

In a possible implementation, the multi-link collaboration includes at least one of the following collaboration: power collaboration, random access collaboration, and power headroom collaboration.

In a possible implementation, the processing module is further configured to: when an inactive link in the plurality of links is activated, trigger, by using Media Access Control MAC signaling on a previously activated link, the currently activated link to perform uplink transmission, where the uplink transmission includes at least one of the following transmission: random access transmission, scheduling requirement transmission, sounding reference signal transmission, and buffer status report transmission.

In a possible implementation, the base station is specifically a macro base station macro eNB or a master node master node, and the transmission point is a small cell.

According to another aspect, a user equipment UE is described, including:
a processing module, configured to generate uplink information; and
a transceiver module, configured to: send the uplink information to a base station, so that the base station configures a first set and/or a second set for the UE based on the uplink information; and when the first set or the second set is configured, establish a plurality of links between transmission points included in the first set or the second set and the UE, where when the first set and the second set are configured, the first set includes at least two transmission points, and the second set is a subset of the first set.

In a possible implementation, a transmission point in the first set is a transmission point whose measured signal strength is greater than or equal to a first threshold, a transmission point in the second set is a transmission point whose measured signal strength is greater than or equal to a second threshold, and the second threshold is greater than the first threshold.

In a possible implementation, each transmission point included in the second set may be activated or deactivated from the first set.

In a possible implementation, when the transmission point included in the second set does not meet the second threshold, a transmission point that is in the first set and outside the second set and that meets the second threshold is added to the second set.

In a possible implementation, the uplink information includes a downlink measurement result greater than the first threshold or the second threshold; and
the processing module is configured to measure a downlink signal of at least one transmission point to obtain at least one downlink measurement result; and determine, from the at least one downlink measurement result, the downlink measurement result greater than the first threshold or the second threshold.

In a possible implementation, the processing module is specifically configured to perform RRM measurement on downlink reference information of the at least one transmission point to obtain the at least one downlink measurement result.

In a possible implementation, the uplink information includes a transmission point identifier corresponding to a downlink measurement result greater than the first threshold or the second threshold; and
the processing module is specifically configured to measure a downlink signal of at least one transmission point to obtain at least one downlink measurement result; and determine, from the at least one downlink measurement result, the transmission point identifier corresponding to the downlink measurement result greater than the first threshold or the second threshold.

In a possible implementation, the processing module is further configured to sort, in ascending order or descending order, the transmission point identifier corresponding to the downlink measurement result greater than the first threshold or the second threshold, to obtain the uplink information.

In a possible implementation, the uplink information is specifically an uplink signal sent by the UE, and the uplink signal is at least one of the following signals: an uplink sounding signal, an uplink sounding reference signal, an uplink sequence code, or a preamble.

In a possible implementation, before sending the uplink information to the base station, the transceiver module is further configured to receive an uplink transmission subframe or an uplink transmission subframe set that is of the uplink signal and that is notified by the base station by using radio resource control RRC signaling.

In a possible implementation, the uplink transmission subframe or the uplink transmission subframe set is coordinated or preconfigured by the base station by using an inter-base station interface.

In a possible implementation, a coverage area of the transmission point included in the first set constitutes a first cell, and the first cell is a first cluster, a first virtual cell, or a first super cell.

In a possible implementation, a primary transmission point included in the first cell is fixed or variable.

In a possible implementation, the first cell has a corresponding cell identifier, and when the first cell is the first cluster, the first virtual cell, or the first super cell, the cell identifier corresponding to the first cell is a cluster identifier, a virtual cell identifier, or a super cell identifier.

In a possible implementation, a coverage area of the transmission point included in the second set constitutes a second cell, and the second cell is a second cluster, a second virtual cell, or a second super cell.

In a possible implementation, a primary transmission point included in the second cell changes with a movement of the UE.

In a possible implementation, the second cell has a corresponding cell identifier, and when the second cell is the second cluster, the second virtual cell, or the second super cell, the cell identifier corresponding to the second cell is a cluster identifier, a virtual cell identifier, or a super cell identifier.

In a possible implementation, the second set is in a multi-RRC link mode, and at least two transmission points in the second set establish RRC links to the UE; or the second set is in a single-RRC link mode, and one transmission point in the second set establishes an RRC link to the UE; or the second set is in a semi-static mode, and the transmission point in the second set changes in the first set in a semi-static manner.

In a possible implementation, before sending the uplink information to the base station, the transceiver module is further configured to receive the first threshold or the second threshold sent by the base station by using configuration signaling.

In a possible implementation, the transceiver module is specifically configured to send uplink information of a transmission point that meets the first threshold or the second threshold to the base station.

In a possible implementation, after sending the uplink information to the base station, the transceiver module is further configured to receive information that is about the first set and/or the second set and that is sent by the base station by using radio resource control RRC signaling; and/or receive activation or deactivation information that is of the second set and that is sent by the base station to the UE by using Media Access Control MAC signaling.

In a possible implementation, the transceiver module is further configured to receive multi-link configuration information sent by the base station by using RRC signaling, to perform multi-link collaboration.

In a possible implementation, the multi-link collaboration includes at least one of the following collaboration: power collaboration, random access collaboration, and power headroom collaboration.

According to still another aspect, an embodiment of the present invention provides a base station according to claim 6 particularly, including: a processor, a memory, a communications interface, and a system bus, where the memory, the communications interface, and the processor are connected and implement mutual communication by using the system bus, the memory is configured to store a computer execution instruction, the communications interface is configured to communicate with another device, and the processor is configured to run the computer execution instruction, so that the base station performs the steps of the method applied to the base station.

According to still another aspect, an embodiment of the present invention provides user equipment, including: a processor, a memory, a communications interface, and a system bus, where the memory, the communications interface, and the processor are connected and implement mutual communication by using the system bus, the memory is configured to store a computer execution instruction, the communications interface is configured to communicate with another device, and the processor is configured to run the computer execution instruction, so that the user equipment performs the steps of the method applied to the user equipment.

According to still another aspect, an embodiment of the present invention provides a base station, and the base station has a function of implementing first base station behavior in the foregoing method design. The function may be implemented by hardware, or may be implemented by hardware by executing corresponding software. The hardware or the software includes one or more units corresponding to the foregoing function.

In a possible design, a structure of the base station includes a processor and a transmitter. The processor is configured to support the first base station in performing a corresponding function in the foregoing method. The transmitter is configured to: support communication between the base station and a terminal, and send information or an instruction used in the foregoing method to the terminal. The base station may further include a memory, and the memory is configured to couple to the processor and store a program instruction and data that are necessary for the base station.

According to still another aspect, an embodiment of the present invention provides user equipment, and the user equipment has a function of implementing user equipment behavior in the foregoing method design. The function may be implemented by hardware, or may be implemented by hardware by executing corresponding software. The hardware or the software includes one or more units corresponding to the foregoing function. The module may be software and/or hardware.

In a possible design, a structure of the user equipment includes a receiver and a processor. The processor is configured to support the user equipment in performing a corresponding function in the foregoing method. The transmitter is configured to: support communication between the user equipment and a base station, and receive information or an instruction that is used in the foregoing method and that is sent by the base station. The user equipment may further include a memory, and the memory is configured to couple to the processor and store a program instruction and data that are necessary for the base station.

According to still another aspect, an embodiment of the present invention provides a communications system, and the system includes the base station and the user equipment that are described in the foregoing aspects.

According to still another aspect, an embodiment of the present invention provides a computer storage medium, configured to store a computer software instruction used by the foregoing base station, and the computer software instruction includes a program designed to execute the foregoing aspect.

According to still another aspect, an embodiment of the present invention provides a computer storage medium, configured to store a computer software instruction used by the foregoing user equipment, and the computer software instruction includes a program designed to execute the foregoing aspect.

According to still another aspect, an embodiment of the present invention provides a chip system, including at least one processor, a memory, an input/output part, and a bus. The at least one processor is configured to obtain an instruction in the memory by using the bus, to implement a design function of the base station in the foregoing method design.

According to still another aspect, an embodiment of the present invention provides a chip system, including at least one processor, a memory, an input/output part, and a bus. The at least one processor is configured to obtain an instruction in the memory by using the bus, to implement a design function of the user equipment in the foregoing method design.

The embodiments of the present invention provide the multi-link configuration method, the base station, and the user equipment. The UE generates the uplink information and sends the uplink information to the base station. The base station configures the first set and/or the second set for the UE based on the uplink information. When the first set or the second set is configured, the plurality of links are established between the transmission points included in the first set or the second set and the UE. When the first set and the second set are configured, the first set includes at least two transmission points, and the second set is the subset of the first set. In this process, the transmission point included in the first set is a candidate transmission point, and the transmission point included in the second set establishes a plurality of links to a user, and is a transmission point that actually transmits data to the UE. When a signal of the transmission point included in the second set is weak or interrupted, a transmission point with good quality is selected from the first set and added to the second set to reduce a quantity of times of link interruption and service interruption, thereby resolving a problem of frequent handover of the UE in a UDN network.

### BRIEF DESCRIPTION OF DRAWINGS

FIG. 1 is a schematic diagram of a UDN architecture to which a multi-link configuration method is applicable according to the present invention;
FIG. 2 is a signaling diagram of Embodiment 1 of a multi-link configuration method according to the present invention;
FIG. 3 is a schematic diagram of a multi-RRC link mode and a single-RRC link mode in which a macro base station is deployed in Embodiment 2 of a multi-link configuration method according to the present invention;
FIG. 4 is a schematic diagram of a multi-RRC link mode and a single-RRC link mode in which no macro base station is deployed in Embodiment 3 of a multi-link configuration method according to the present invention;
FIG. 5 is a schematic diagram of semi-static handover of a transmission point included in a second set in Embodiment 4 of a multi-link configuration method according to the present invention;
FIG. 6 is a schematic configuration diagram of Embodiment 5 of a multi-link configuration method according to the present invention;
FIG. 7 is a schematic structural diagram of Embodiment 1 of a base station according to the present invention;
FIG. 8 is a schematic structural diagram of Embodiment 1 of user equipment according to the present invention;
FIG. 9 is a schematic structural diagram of Embodiment 2 of a base station according to the present invention; and
FIG. 10 is a schematic structural diagram of Embodiment 2 of user equipment according to the present invention.

### DESCRIPTION OF EMBODIMENTS

Currently, a large quantity of small cells are deployed in a UDN, and the small cell has a small coverage area. Therefore, frequent handover is caused even if user equipment (User Equipment, UE) moves at a low or medium speed. Therefore, during UDN deployment, how to resolve a problem of frequent handover of UE in a UDN network is an urgent problem to be resolved in the industry.

In view of this, embodiments of the present invention provide a multi-link configuration method, a base station, and user equipment, to resolve the problem of frequent handover of UE in a UDN network by configuring a plurality of links for the user equipment.

The technology described in this specification may be applied to various communications systems, for example, current 2G and 3G communications systems and a next-generation communications system, such as the Global System for Mobile Communications (Global System for Mobile Communications, GSM), a Code Division Multiple Access (Code Division Multiple Access, CDMA) system, a Time Division Multiple Access (Time Division Multiple Access, TDMA) system, a Wideband Code Division Multiple Access (Wideband Code Division Multiple Access Wireless, WCDMA) system, a Frequency Division Multiple Access (Frequency Division Multiple Addressing, FDMA) system, an Orthogonal Frequency Division Multiple Access (Orthogonal Frequency-Division Multiple Access, OFDMA) system, a single carrier FDMA (SC-FDMA) system, a General Packet Radio Service (General Packet Radio Service, GPRS) system, a Long Term Evolution (Long Term Evolution, LTE) system, a UDN system, an E-UTRA system, and another communications system of this type.

The user equipment in this application may be a wireless terminal. The wireless terminal may be a device that provides a user with voice and/or data connectivity, a handheld device with a wireless connection function, or another processing device connected to a wireless modem. The wireless terminal may communicate with one or more core networks by using a radio access network (for example, RAN, Radio Access Network). The wireless terminal may be a mobile terminal, such as a mobile phone (or referred to as a "cellular" phone) and a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communications service (Personal Communication Service, PCS) phone, a cordless telephone set, a Session Initiation Protocol (SIP) phone, a wireless local loop (Wireless Local Loop, WLL) station, or a personal digital assistant (Personal Digital Assistant, PDA). The wireless terminal may also be called a system, a subscriber unit (Subscriber Unit), a subscriber station (Subscriber Station), a mobile station (Mobile Station), a mobile console (Mobile), a remote station (Remote Station), a remote terminal (Remote Terminal), an access terminal (Access Terminal), a user terminal (User Terminal), a user agent (User Agent), a user device (User Device), or user equipment (User Equipment).

The small cell, namely, a transmission point, in this application may be a device that communicates with a wireless terminal by using one or more sectors over an air interface in an access network. The base station may be configured to mutually convert a received over-the-air frame and an IP packet and serve as a router between the wireless terminal and a remaining part of the access network, where the remaining part of the access network may include an Internet Protocol (IP) network.

In addition, the present invention is not limited to a low-frequency system, and a high-frequency millimeter wave system may be used. Therefore, related measurement and all related configurations may be performed for beamforming (beamforming). In other words, the related measurement and all the related configurations may be performed based on a beam beam.

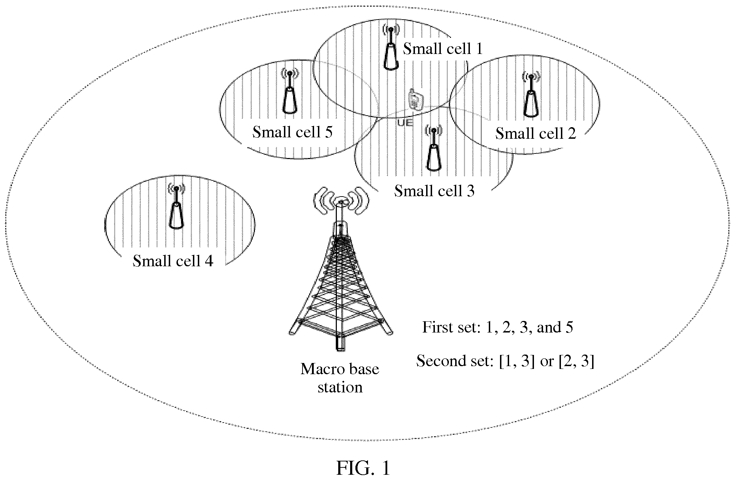

For ease of description and for clarity, that a system architecture is specifically a UDN system is used as an example below to describe the technical solutions of the present invention in detail. Specifically, refer to FIG. 1.

FIG. 1 is a schematic diagram of a UDN architecture to which a multi-link configuration method is applicable according to the present invention. As shown in FIG. 1, the architecture includes a macro base station and five transmission points, namely, small cells 1 to 5. The small cells 1, 2, 3, and 5 are three adjacent small cells in the UDN, and the small cell 4 is a small cell that is not adjacent to the small cells 1, 2, 3, and 5. It is assumed that transmission points included in a first set configured for UE are the small cells 1, 2, 3, and 5. Because a second set is a subset of the first set, transmission points included in the second set may be 1 and 3, or transmission points included in the second set may be 2 and 3, or the like.

It should be noted that in a cell virtualization technology, a plurality of transmission points around the UE constitute a virtual cell to provide a service for a user. Resource composition and setting of the virtual cell may be dynamically configured and modified based on a movement, a service requirement, or the like of the user, and hibernation and signal sending of a transmission node may also be coordinated. One transmission node in these transmission nodes is selected as a primary transmission node.

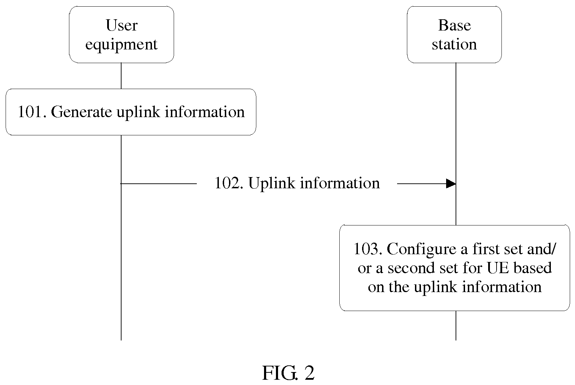

The following describes the multi-link configuration method of the present invention in detail based on FIG. 1. For details, refer to FIG. 2.

FIG. 2 is a signaling diagram of Embodiment 1 of a multi-link configuration method according to the present invention. In this embodiment, interaction between a base station and user equipment is applicable to a scenario in which a multi-link configuration is required. Specifically, this embodiment includes the following steps.

101. User equipment UE generates uplink information.

In this step, the UE generates the uplink information based on a downlink signal or an uplink signal. For example, the UE may generate the uplink information in the following manners:
Manner 1: The uplink information is specifically a downlink measurement result greater than a first threshold or a second threshold. In this case, the UE performs measurement such as RRM measurement on a downlink signal of at least one transmission point to obtain at least one downlink measurement result, determines, from the at least one downlink measurement result, the downlink measurement result greater than the first threshold or the second threshold, and uses the downlink measurement result greater than the first threshold or the second threshold as the uplink information.
Manner 2: The uplink information is specifically a transmission point identifier corresponding to a downlink measurement result greater than a first threshold or a second threshold. In this case, the UE measures a downlink signal of at least one transmission point to obtain at least one downlink measurement result, and determines, from the at least one downlink measurement result, the transmission point identifier corresponding to the downlink measurement result greater than the first threshold or the second threshold. For example, the UE sorts, in ascending order or descending order, the transmission point identifier corresponding to the downlink measurement result greater than the first threshold or the second threshold, to obtain the uplink information.
Manner 3: The uplink information is specifically an uplink signal sent by the UE, and the uplink signal is at least one of the following signals: an uplink sounding signal, an uplink sounding reference signal, an uplink sequence code, or a preamble.

In this manner, the uplink information is at least one uplink signal sent by the UE, such as an uplink sounding signal, an uplink sequence code, or a preamble.

102. The user equipment UE sends the uplink information to a base station.

In this step, the UE sends the uplink information in 101 to the base station. When the uplink information is generated in the foregoing manner 3, the UE first receives an uplink transmission subframe or an uplink transmission subframe set that is of the uplink signal and that is notified by the base station by using radio resource control RRC signaling, and then sends the uplink information to the base station in the uplink transmission subframe or a subframe included in the uplink transmission subframe set. In this process, the uplink transmission subframe or the uplink transmission subframe set is coordinated or preconfigured by the base station by using an inter-base station interface.

103. The base station configures a first set and/or a second set for the UE based on the uplink information.

When the first set or the second set is configured, a plurality of links are established between transmission points included in the first set or the second set and the UE; and when the first set and the second set are configured, the first set includes at least two transmission points, and the second set is a subset of the first set.

Referring to FIG. 1, in this embodiment of the present invention, the base station is, for example, a macro base station, a macro eNB, or a master node master node (not shown in the figure). In this step, a transmission point in the first set is a transmission point whose measured signal strength is greater than or equal to the first threshold, a transmission point in the second set is a transmission point whose measured signal strength is greater than or equal to the second threshold, and the second threshold is greater than the first threshold. Each transmission point included in the second set may be activated or deactivated from the first set. When the UE moves, and when the transmission point included in the second set does not meet the second threshold, for example, when a signal of the transmission point in the second set is weak or interrupted, a transmission point that is in the first set and outside the second set and that meets the second threshold is added to the second set. The measured signal strength is obtained through radio resource management RRM measurement, and may include at least one of the following: a reference signal received power RSRP (reference signal receiving power), a reference signal received quality RSRQ (reference signal receiving quality), a received signal strength indicator RSSI (Received Signal Strength Indication), or any beam-based measurement parameter.

According to the multi-link configuration method provided in this embodiment of the present invention, the UE generates the uplink information and sends the uplink information to the base station. The base station configures the first set and/or the second set for the UE based on the uplink information. When the first set or the second set is configured, the plurality of links are established between the transmission points included in the first set or the second set and the UE. When the first set and the second set are configured, the first set includes at least two transmission points, and the second set is the subset of the first set. In this process, the transmission point included in the first set is a candidate transmission point, and the transmission point included in the second set establishes a plurality of links to a user, and is a transmission point that actually transmits data to the UE. When a signal of the transmission point included in the second set is weak or interrupted, a transmission point with good quality is selected from the first set and added to the second set to reduce a quantity of times of link interruption and service interruption, thereby resolving a problem of frequent handover of the UE in a UDN network.

Optionally, in the foregoing embodiment, the transmission point included in the first set constitutes a first cell, and a primary transmission point included in the first cell is fixed or variable. The first cell is a first cluster, a first virtual cell, or a first super cell. In addition, the first cluster has a corresponding cluster identifier, the first virtual cell has a corresponding virtual cell identifier, and the first super cell has a corresponding super cell identifier.

Optionally, in the foregoing embodiment, the transmission point included in the second set constitutes a second cell, and a primary transmission point included in the second cell changes with a movement of the UE. The second cell is a second cluster, a second virtual cell, or a second super cell. The second cluster has a corresponding cluster identifier, the second virtual cell has a corresponding virtual cell identifier, and the second super cell has a corresponding super cell identifier.

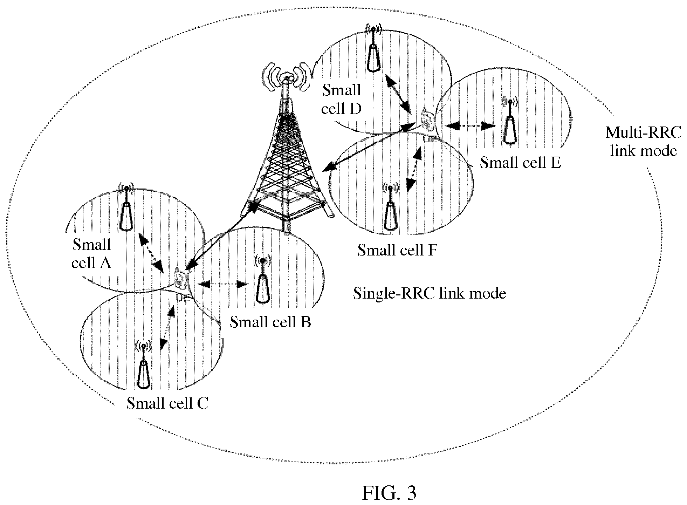

Optionally, in the foregoing embodiment, the second set is in a multi-RRC link mode, and at least two transmission points in the second set establish RRC links to the UE; or the second set is in a single-RRC link mode, and one transmission point in the second set establishes an RRC link to the UE; or the second set is in a semi-static mode, and the transmission point in the second set changes in the first set in a semi-static manner. Specifically, FIG. 3 is a schematic diagram of a multi-RRC link mode and a single-RRC link mode in which a macro base station is deployed in Embodiment 2 of a multi-link configuration method according to the present invention.

Referring to FIG. 3, in an overlay (overlay) scenario including a macro base station, it is assumed that transmission points included in a second set are a small cell D, a small cell E, and a small cell F, and if UE works in the multi-RRC link mode, the UE may retain RRC links to the macro base station and the transmission point small cell D, as shown by solid line arrows in the multi-RRC link mode in the figure (a dashed line arrow indicates that an RRC link is not established). It is assumed that the transmission points included in the second set are a small cell A, a small cell B, and a small cell C, and if the UE works in the single-RRC link mode, the UE retains only an RRC link to the macro base station. As shown in the figure, in the single-RRC link mode, the UE retains the RRC link to the macro base station, and does not retain an RRC link, shown by a dashed line, between the UE and each of the small cell A, the small cell B, and the small cell C.

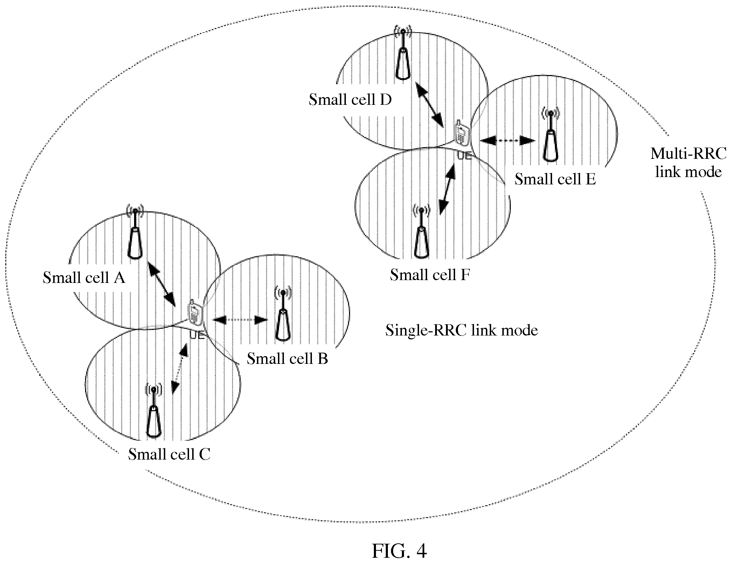

FIG. 4 is a schematic diagram of a multi-RRC link mode and a single-RRC link mode in which no macro base station is deployed in Embodiment 3 of a multi-link configuration method according to the present invention. Referring to FIG. 4, in a standalone (standalone) scenario, it is assumed that transmission points included in a second set are a small cell D, a small cell E, and a small cell F, and if UE works in the multi-RRC link mode, the UE may retain RRC links to the transmission point small cell D and the transmission point small cell F, as shown by solid line arrows in the multi-RRC link mode in the figure. In other words, RRC links between the UE and some or all of the transmission points in the second transmission point set may be retained. If the UE works in the single-RRC link mode and it is assumed that the transmission points included in the second set are a small cell A, a small cell B, and a small cell C, the UE retains only an RRC link to the transmission point small cell A. In other words, an RRC link between the UE and one transmission point in the second set is retained.

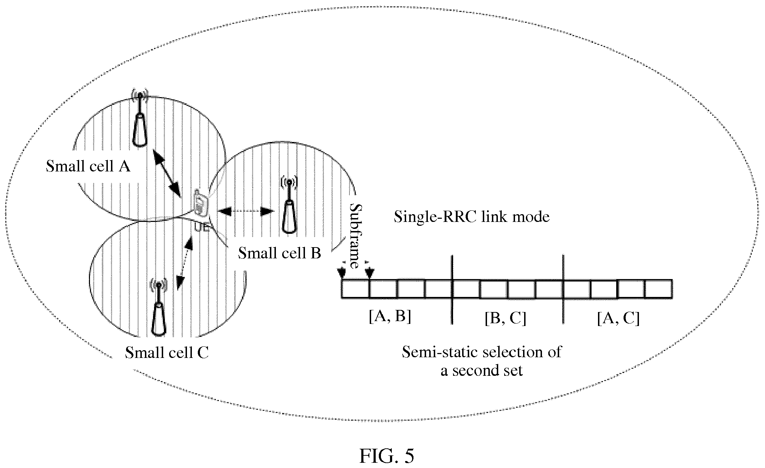

In FIG. 3 and FIG. 4, regardless of the multi-RRC link mode or the single-RRC link mode, to ensure energy balance of transmission points, semi-static conversion may be performed between transmission points that meet a transmission requirement, where meeting the transmission requirement means that a measured signal strength is greater than or equal to a predetermined threshold. Specifically, refer to FIG. 5.

FIG. 5 is a schematic diagram of semi-static handover of a transmission point included in a second set in Embodiment 4 of a multi-link configuration method according to the present invention. Referring to FIG. 5, as time, namely, a subframe goes by, transmission points included in the second set in a first period may be a small cell A and a small cell B, transmission points included in the second set in a second period may be changed to the small cell B and a small cell C, and transmission points included in the second set in a third period may be changed to the small cell C and the small cell A. In a multi-RRC link mode, at least one transmission point in any semi-statically converted transmission point needs to maintain a link to UE.

Optionally, in the foregoing embodiment, a base station pre-sends a first threshold to the UE by using configuration signaling, so that the UE sends, to the base station, uplink information of a transmission point that meets the first threshold, to avoid a disadvantage of a large amount of information and occupation of a large quantity of resources caused by the UE by sending uplink information of all transmission points.

Optionally, in the foregoing embodiment, after the base station configures a first set and/or the second set for the UE based on the uplink information, the base station sends configuration information of the first set and/or the second set to the UE or the transmission point. For example, the base station sends information about the first set and the second set to the UE by using radio resource control RRC signaling. For another example, the base station sends activation or deactivation information of the second set to the UE by using Media Access Control MAC signaling.

Optionally, in the foregoing embodiment, after configuring the first set and the second set for a user, the base station sends multi-link configuration information to the UE by using RRC signaling, to instruct the UE to perform multi-link collaboration. The multi-link collaboration includes at least one of the following collaboration: power collaboration, random access collaboration, and power headroom collaboration.

Optionally, in the foregoing embodiment, when an inactive link in a plurality of links is activated, the base station triggers, by using Media Access Control MAC signaling on a previously activated link, the currently activated link to perform uplink transmission, where the uplink transmission includes at least one of the following transmission: random access transmission, scheduling requirement transmission, sounding reference signal transmission, and buffer status report transmission.

Optionally, in the foregoing embodiment, the base station is specifically a macro base station macro eNB or a master node master node, and the transmission point is a small cell.

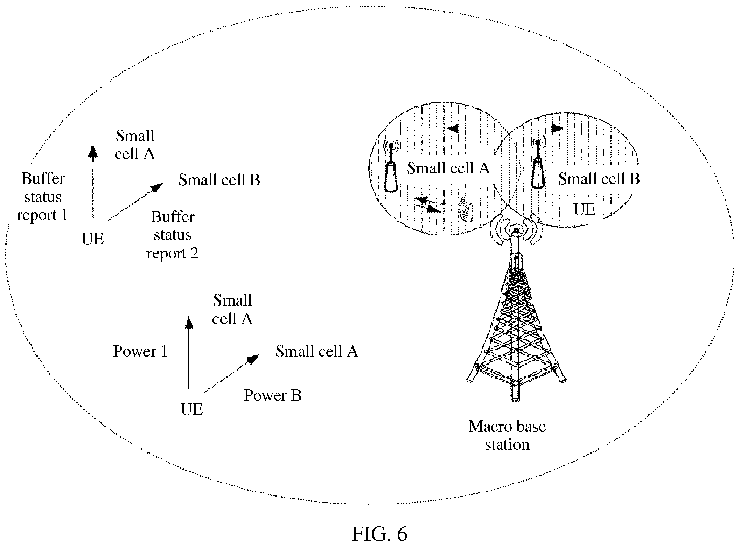

FIG. 6 is a schematic configuration diagram of Embodiment 5 of a multi-link configuration method according to the present invention. Referring to FIG. 6, in this embodiment, an area covered by a macro base station includes a small cell A and a small cell B. The small cell A and the small cell B constitute a virtual cell, the small cell A is a master node or a primary cell in the virtual cell, and the small cell B is a secondary node or a secondary cell in the virtual cell. UE is first connected to the small cell A. In an embodiment, when the UE gradually approaches the small cell B, the UE may report information about the approach to the macro base station. Then, the macro base station performs coordination on an X2 interface between the macro base station and the small cell A and an X2 interface between the macro base station and the small cell B, determines that the UE may be configured to be in an "MC" mode, and notifies the UE of the "MC" mode by using signaling. In this case, the UE establishes links to the small cell A and the small cell B. Some system information, for example, a virtual cell ID and system bandwidth, of a small cell in the virtual cell may be delivered by the small cell A. Other system information and a UE-specific configuration may be delivered by a secondary cell such as the small cell B. The macro base station may further send multi-link configuration information to the small cell A, the small cell B, and the UE by using RRC signaling. Then, the UE performs multi-link collaboration, for example, power collaboration, random access collaboration, and power headroom collaboration.

In another embodiment, the UE may report information about the approach to the small cell A. Then, the small cell A performs coordination on an X2 interface between the small cell A and the small cell B, determines that the UE may be configured to be in an "MC" mode, and notifies the UE of the "MC" mode by using signaling. In this case, the UE establishes links to the small cell A and the small cell B. Some system information, for example, a virtual cell ID and system bandwidth, of a small cell in the virtual cell may be delivered by the small cell A. Other system information and a UE-specific configuration may be delivered by a secondary cell such as the small cell B. The small cell A may further send multi-link configuration information to the small cell B and the UE by using RRC signaling. Then, the UE performs multi-link collaboration, for example, power collaboration, random access collaboration, and power headroom collaboration.

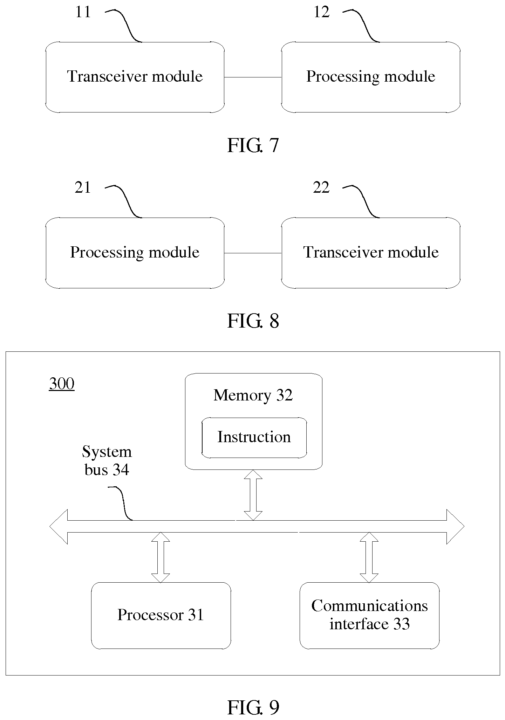

FIG. 7 is a schematic structural diagram of Embodiment 1 of a base station according to the present invention. The base station provided in this embodiment may implement steps of a method that is applied to the base station and that is provided in any embodiment of the present invention. Specifically, the base station provided in this embodiment includes:
a transceiver module 11, configured to receive uplink information sent by user equipment UE; and
a processing module 12, configured to configure a first set and/or a second set for the UE based on the uplink information, and when the first set or the second set is configured, establish a plurality of links between transmission points included in the first set or the second set and the UE, where when the first set and the second set are configured, the first set includes at least two transmission points, and the second set is a subset of the first set.

The base station provided in this embodiment of the present invention receives the uplink information generated and sent by the UE, and configures the first set and/or the second set for the UE based on the uplink information. When the first set or the second set is configured, the plurality of links are established between the transmission points included in the first set or the second set and the UE. When the first set and the second set are configured, the first set includes at least two transmission points, and the second set is the subset of the first set. In this process, the transmission point included in the first set is a candidate transmission point, and the transmission point included in the second set establishes a plurality of links to a user, and is a transmission point that actually transmits data to the UE. When a signal of the transmission point included in the second set is weak or interrupted, a transmission point with good quality is selected from the first set and added to the second set to reduce a quantity of times of link interruption and service interruption, thereby resolving a problem of frequent handover of the UE in a UDN network.

Optionally, in an embodiment of the present invention, a transmission point in the first set is a transmission point whose measured signal strength is greater than or equal to a first threshold, a transmission point in the second set is a transmission point whose measured signal strength is greater than or equal to a second threshold, and the second threshold is greater than the first threshold.

Optionally, in an embodiment of the present invention, each transmission point included in the second set may be activated or deactivated from the first set.

Optionally, in an embodiment of the present invention, the processing module 12 is further configured to: when the transmission point included in the second set does not meet the second threshold, add a transmission point that is in the first set and outside the second set and that meets the second threshold to the second set.

Optionally, in an embodiment of the present invention, the uplink information is a downlink measurement result that is in at least one downlink measurement result and that is greater than the first threshold or the second threshold, and the at least one downlink measurement result is obtained by the UE by measuring a downlink signal of at least one transmission point.

Optionally, in an embodiment of the present invention, the at least one downlink measurement result is obtained by the UE by performing RRM measurement on the downlink signal of the at least one transmission point.

Optionally, in an embodiment of the present invention, the uplink information is at least one transmission point identifier, and the at least one transmission point identifier is a transmission point identifier corresponding to a downlink measurement result that is greater than the first threshold or the second threshold and that is in at least one downlink measurement result obtained by the UE by measuring a downlink signal of at least one transmission point.

Optionally, in an embodiment of the present invention, the uplink information is obtained by the UE by sorting, in ascending order or descending order, transmission point identifiers greater than the second preset threshold.

Optionally, in an embodiment of the present invention, the uplink information is specifically an uplink signal sent by the UE, and the uplink signal is at least one of the following signals: an uplink sounding signal, an uplink sounding reference signal, an uplink sequence code, or a preamble.

Optionally, in an embodiment of the present invention, before receiving the uplink information sent by the user equipment UE, the transceiver module 11 is further configured to notify an uplink transmission subframe or an uplink transmission subframe set of the uplink signal by using radio resource control RRC signaling.

Optionally, in an embodiment of the present invention, before notifying the uplink transmission subframe or the uplink transmission subframe set of the uplink signal by using RRC signaling, the transceiver module 11 is further configured to coordinate or preconfigure the uplink transmission subframe or the uplink transmission subframe set by using an inter-base station interface.

Optionally, in an embodiment of the present invention, the transmission point included in the first set constitutes a first cell, and the first cell is a first cluster, a first virtual cell, or a first super cell.

Optionally, in an embodiment of the present invention, a primary transmission point included in the first cell is fixed or variable.

Optionally, in an embodiment of the present invention, the first cell has a corresponding cell identifier, and when the first cell is the first cluster, the first virtual cell, or the first super cell, the cell identifier corresponding to the first cell is a cluster identifier, a virtual cell identifier, or a super cell identifier.

Optionally, in an embodiment of the present invention, the transmission point included in the second set constitutes a second cell, and the second cell is a second cluster, a second virtual cell, or a second super cell.

Optionally, in an embodiment of the present invention, a primary transmission point included in the second cell changes with a movement of the UE.

Optionally, in an embodiment of the present invention, the second cell has a corresponding cell identifier, and when the second cell is the second cluster, the second virtual cell, or the second super cell, the cell identifier corresponding to the second cell is a cluster identifier, a virtual cell identifier, or a super cell identifier.

Optionally, in an embodiment of the present invention, the second set is in a multi-RRC link mode, and at least two transmission points in the second set establish RRC links to the UE; or the second set is in a single-RRC link mode, and one transmission point in the second set establishes an RRC link to the UE; or the second set is in a semi-static mode, and the transmission point in the second set changes in the first set in a semi-static manner.

Optionally, in an embodiment of the present invention, before receiving the uplink information sent by the user equipment UE, the transceiver module 11 is further configured to send the first threshold or the second threshold to the UE by using configuration signaling.

Optionally, in an embodiment of the present invention, the transceiver module 11 is specifically configured to receive uplink information that is sent by the user equipment UE and that is of a transmission point that meets the first threshold or the second threshold.

Optionally, in an embodiment of the present invention, after the processing module 12 configures the first set and/or the second set for the UE based on the uplink information, the transceiver module 11 is further configured to: send information about the first set and/or the second set to the UE by using radio resource control RRC signaling; and/or send activation or deactivation information of the second set to the UE by using Media Access Control MAC signaling.

Optionally, in an embodiment of the present invention, the transceiver module 11 is further configured to send multi-link configuration information to the UE by using RRC signaling, to instruct the UE to perform multi-link collaboration.

Optionally, in an embodiment of the present invention, the multi-link collaboration includes at least one of the following collaboration: power collaboration, random access collaboration, and power headroom collaboration.

Optionally, in an embodiment of the present invention, the processing module 12 is further configured to: when an inactive link in the plurality of links is activated, trigger, by using Media Access Control MAC signaling on a previously activated link, the currently activated link to perform uplink transmission, where the uplink transmission includes at least one of the following transmission: random access transmission, scheduling requirement transmission, sounding reference signal transmission, and buffer status report transmission.

Optionally, in an embodiment of the present invention, the base station is specifically a macro base station macro eNB or a master node master node, and the transmission point is a small cell.

FIG. 8 is a schematic structural diagram of Embodiment 1 of user equipment according to the present invention. The user equipment provided in this embodiment may implement steps of a method that is applied to the user equipment and that is provided in any embodiment of the present invention. Specifically, the user equipment provided in this embodiment includes:
a processing module 21, configured to generate uplink information; and
a transceiver module 22, configured to: send the uplink information to a base station, so that the base station configures a first set and/or a second set for the UE based on the uplink information; and when the first set or the second set is configured, establish a plurality of links between transmission points included in the first set or the second set and the UE, where when the first set and the second set are configured, the first set includes at least two transmission points, and the second set is a subset of the first set.

The UE provided in this embodiment of the present invention generates the uplink information and sends the uplink information to the base station. The base station configures the first set and/or the second set for the UE based on the uplink information. When the first set or the second set is configured, the plurality of links are established between the transmission points included in the first set or the second set and the UE. When the first set and the second set are configured, the first set includes at least two transmission points, and the second set is the subset of the first set. In this process, the transmission point included in the first set is a candidate transmission point, and the transmission point included in the second set establishes a plurality of links to a user, and is a transmission point that actually transmits data to the UE. When a signal of the transmission point included in the second set is weak or interrupted, a transmission point with good quality is selected from the first set and added to the second set to reduce a quantity of times of link interruption and service interruption, thereby resolving a problem of frequent handover of the UE in a UDN network.

Optionally, in an embodiment of the present invention, a transmission point in the first set is a transmission point whose measured signal strength is greater than or equal to a first threshold, a transmission point in the second set is a transmission point whose measured signal strength is greater than or equal to a second threshold, and the second threshold is greater than the first threshold.

Optionally, in an embodiment of the present invention, each transmission point included in the second set may be activated or deactivated from the first set.

Optionally, in an embodiment of the present invention, when the transmission point included in the second set does not meet the second threshold, a transmission point that is in the first set and outside the second set and that meets the second threshold is added to the second set.

Optionally, in an embodiment of the present invention, the uplink information includes a downlink measurement result greater than the first threshold or the second threshold; and
the processing module 21 is configured to measure a downlink signal of at least one transmission point to obtain at least one downlink measurement result; and determine, from the at least one downlink measurement result, the downlink measurement result greater than the first threshold or the second threshold.

Optionally, in an embodiment of the present invention, the processing module 21 is specifically configured to perform RRM measurement on downlink reference information of the at least one transmission point to obtain the at least one downlink measurement result.

Optionally, in an embodiment of the present invention, the uplink information includes a transmission point identifier corresponding to a downlink measurement result greater than the first threshold or the second threshold; and
the processing module 21 is specifically configured to measure a downlink signal of at least one transmission point to obtain at least one downlink measurement result; and determine, from the at least one downlink measurement result, the transmission point identifier corresponding to the downlink measurement result greater than the first threshold or the second threshold.

Optionally, in an embodiment of the present invention, the processing module 21 is further configured to sort, in ascending order or descending order, the transmission point identifier corresponding to the downlink measurement result greater than the first threshold or the second threshold, to obtain the uplink information.

Optionally, in an embodiment of the present invention, the uplink information is specifically an uplink signal sent by the UE, and the uplink signal is at least one of the following signals: an uplink sounding signal, an uplink sounding reference signal, an uplink sequence code, or a preamble.

Optionally, in an embodiment of the present invention, before sending the uplink information to the base station, the transceiver module 22 is further configured to receive an uplink transmission subframe or an uplink transmission subframe set that is of the uplink signal and that is notified by the base station by using radio resource control RRC signaling.

Optionally, in an embodiment of the present invention, the uplink transmission subframe or the uplink transmission subframe set is coordinated or preconfigured by the base station by using an inter-base station interface.

Optionally, in an embodiment of the present invention, a coverage area of the transmission point included in the first set constitutes a first cell, and the first cell is a first cluster, a first virtual cell, or a first super cell.

Optionally, in an embodiment of the present invention, a primary transmission point included in the first cell is fixed or variable.

Optionally, in an embodiment of the present invention, the first cell has a corresponding cell identifier, and when the first cell is the first cluster, the first virtual cell, or the first super cell, the cell identifier corresponding to the first cell is a cluster identifier, a virtual cell identifier, or a super cell identifier.

Optionally, in an embodiment of the present invention, a coverage area of the transmission point included in the second set constitutes a second cell, and the second cell is a second cluster, a second virtual cell, or a second super cell.

Optionally, in an embodiment of the present invention, a primary transmission point included in the second cell changes with a movement of the UE.

Optionally, in an embodiment of the present invention, the second cell has a corresponding cell identifier, and when the second cell is the second cluster, the second virtual cell, or the second super cell, the cell identifier corresponding to the second cell is a cluster identifier, a virtual cell identifier, or a super cell identifier.

Optionally, in an embodiment of the present invention, the second set is in a multi-RRC link mode, and at least two transmission points in the second set establish RRC links to the UE; or
the second set is in a single-RRC link mode, and one transmission point in the second set establishes an RRC link to the UE; or
the second set is in a semi-static mode, and the transmission point in the second set changes in the first set in a semi-static manner.

Optionally, in an embodiment of the present invention, before sending the uplink information to the base station, the transceiver module 22 is further configured to receive the first threshold or the second threshold sent by the base station by using configuration signaling.

Optionally, in an embodiment of the present invention, the transceiver module 22 is specifically configured to send uplink information of a transmission point that meets the first threshold or the second threshold to the base station.

Optionally, in an embodiment of the present invention, after sending the uplink information to the base station, the transceiver module 22 is further configured to receive information that is about the first set and/or the second set and that is sent by the base station by using radio resource control RRC signaling; and/or receive activation or deactivation information that is of the second set and that is sent by the base station to the UE by using Media Access Control MAC signaling.

Optionally, in an embodiment of the present invention, the transceiver module 22 is further configured to receive multi-link configuration information sent by the base station by using RRC signaling, to perform multi-link collaboration.

Optionally, in an embodiment of the present invention, the multi-link collaboration includes at least one of the following collaboration: power collaboration, random access collaboration, and power headroom collaboration.

FIG. 9 is a schematic structural diagram of Embodiment 2 of a base station according to the present invention. A base station 300 provided in this embodiment includes: a processor 31, a memory 32, a communications interface 33, and a system bus 34, where the memory 32, the communications interface 33, and the processor 31 are connected and implement mutual communication by using the system bus 34, the memory 32 is configured to store a computer execution instruction, the communications interface 33 is configured to communicate with another device, and the processor 31 is configured to run the computer execution instruction, so that the base station 300 performs the steps of the method applied to the base station.

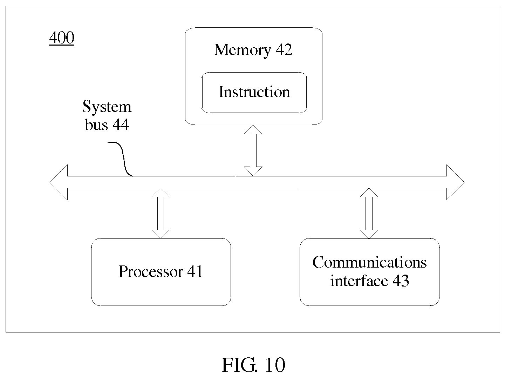

FIG. 10 is a schematic structural diagram of Embodiment 2 of user equipment according to the present invention. User equipment 400 provided in this embodiment includes: a processor 41, a memory 42, a communications interface 43, and a system bus 44, where the memory 42, the communications interface 43, and the processor 41 are connected and implement mutual communication by using the system bus 44, the memory 42 is configured to store a computer execution instruction, the communications interface 43 is configured to communicate with another device, and the processor 41 is configured to run the computer execution instruction, so that the user equipment 400 performs the steps of the method applied to the user equipment.

In FIG. 9 and FIG. 10, the system bus may be a peripheral component interconnect (peripheral component interconnect, PCI) bus, an extended industry standard architecture (extended industry standard architecture, EISA) bus, or the like. The system bus may be classified into an address bus, a data bus, a control bus, and the like. For ease of indication, the bus is indicated by using only one bold line in the figure. However, it does not indicate that there is only one bus or only one type of bus. The communications interface is configured to implement communication between a database access apparatus and another device (such as a client, a read/write library, and a read-only library). The memory may include a random access memory (random access memory, RAM), or may further include a non-volatile memory (non-volatile memory), for example, at least one magnetic disk storage.

The processor may be a general purpose processor, including a central processing unit (Central Processing Unit, CPU), a network processor (Network Processor, NP), and the like; or may be a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate, a transistor logic device, or a discrete hardware component.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A multi-link configuration method, comprising using a base station as a master node in an ultra-dense network having small cells deployed on a large scale in a hot spot area, the small cells being transmission points configured to communicate with a user equipment UE by using one or more sectors over an air interface in an access network, for:
receiving (102), by the base station, uplink information sent by the user equipment UE;
configuring (103), of the transmission points and by the base station, a first set and/or a second set for the UE based on the uplink information; and
when the first set or the second set is configured, establishing a plurality of links between the transmission points comprised in the first set or the second set and the UE, wherein
when the first set and the second set are configured, the first set comprises at least two transmission points, and the second set is a subset of the first set, wherein a transmission point in the first set is a transmission point whose measured signal strength is greater than or equal to a first threshold, a transmission point in the second set is a transmission point whose measured signal strength is greater than or equal to a second threshold, and the second threshold is greater than the first threshold;
wherein each transmission point comprised in the second set may be activated or deactivated from the first set;
when the transmission point comprised in the second set does not meet the second threshold, a transmission point that is in the first set and outside the second set and that meets the second threshold is added to the second set; wherein:
(a) the uplink information is a downlink measurement result that is in at least one downlink measurement result and that is greater than the first threshold or the second threshold; or,
(b) the uplink information is at least one transmission point identifier, and the at least one transmission point identifier is a transmission point identifier corresponding to a downlink measurement result ; or,
(c) the uplink information is specifically an uplink signal sent by the UE, and the uplink signal is at least one of the following signals: an uplink sounding signal, an uplink sounding reference signal, an uplink sequence code, or a preamble;
wherein
before the receiving, by a base station, uplink information sent by user equipment UE, the method further comprises:
notifying, by the base station, an uplink transmission subframe or an uplink transmission subframe set of the uplink signal by using radio resource control RRC signaling;
before the notifying, by the base station, an uplink transmission subframe or an uplink transmission subframe set of the uplink signal by using RRC signaling, the method further comprises:
coordinating or preconfiguring, by the base station, the uplink transmission subframe or the uplink transmission subframe set by using an inter-base station interface.

2. The method according to claim 1, wherein
the transmission point comprised in the first set constitutes a first cell, and the first cell is a first cluster, a first virtual cell, or a first super cell;
wherein
a primary transmission point comprised in the first cell is fixed or variable;
the first cell has a corresponding cell identifier, and when the first cell is the first cluster, the first virtual cell, or the first super cell, the cell identifier corresponding to the first cell is a cluster identifier, a virtual cell identifier, or a super cell identifier.

3. The method according to any one of claims 1 to 2, wherein
the transmission point comprised in the second set constitutes a second cell, and the second cell is a second cluster, a second virtual cell, or a second super cell;
wherein
a primary transmission point comprised in the second cell changes with a movement of the UE;
the second cell has a corresponding cell identifier, and when the second cell is the second cluster, the second virtual cell, or the second super cell, the cell identifier corresponding to the second cell is a cluster identifier, a virtual cell identifier, or a super cell identifier.

4. The method according to any one of claims 1 to 3, wherein
the second set is in a multi-RRC link mode, and at least two transmission points in the second set establish RRC links to the UE; or
the second set is in a single-RRC link mode, and one transmission point in the second set establishes an RRC link to the UE; or
the second set is in a semi-static mode, and the transmission point in the second set changes in the first set in a semi-static manner;
wherein
before the receiving, by a base station, uplink information sent by user equipment UE, the method further comprises:
sending, by the base station, the first threshold or the second threshold to the UE by using configuration signaling;
the receiving, by a base station, uplink information sent by user equipment UE comprises:
receiving, by the base station, uplink information that is sent by the user equipment UE and that is of a transmission point that meets the first threshold or the second threshold.

5. The method according to any one of claims 1 to 4, wherein
after the configuring, by the base station, a first set and/or a second set for the UE based on the uplink information, the method further comprises:
sending, by the base station, information about the first set and/or the second set to the UE by using radio resource control RRC signaling; and/or
sending, by the base station, activation or deactivation information of the second set to the UE by using Media Access Control MAC signaling;
further comprising:
sending, by the base station, multi-link configuration information to the UE by using RRC signaling, to instruct the UE to perform multi-link collaboration;
wherein
the multi-link collaboration comprises at least one of the following collaboration:
power collaboration, random access collaboration, and power headroom collaboration;
further comprising:
when an inactive link in the plurality of links is activated, triggering, by the base station by using Media Access Control MAC signaling on a previously activated link, the currently activated link to perform uplink transmission, wherein the uplink transmission comprises at least one of the following transmission: random access transmission, scheduling requirement transmission, sounding reference signal transmission, and buffer status report transmission.

6. A base station being used as a master node in an ultra-dense network having small cells deployed on a large scale in a hot spot area, the small cells being transmission points configured to communicate with a user equipment UE by using one or more sectors over an air interface in an access network, the base station including either:
(a) a transceiver module (11), configured to receive uplink information sent by user equipment UE; and a processing module (12) configured to perform the method according to any of claims 1 to 5; or,
(b) a processor (31), a memory (32), a communications interface (33), and a system bus (34), where the memory (32), the communications interface (33), and the processor (31) are connected and implement mutual communication by using the system bus (33), the memory (32) is configured to store a computer execution instruction, the communications interface (33) is configured to communicate with another device, the processor (31) is configured to run the computer execution instruction and the computer execution instruction are configured such that when the processor (31) runs the computer execution instruction, the base station (300) performs the steps of the method according to any of claims 1 to 5.

## Patentansprüche

1. Mehrfachverbindungskonfigurationsverfahren, umfassend das Verwenden einer Basisstation als Master-Knoten in einem ultradichten Netzwerk mit in einem Hotspot-Bereich in großem Umfang eingesetzten Kleinzellen, wobei die Kleinzellen Übertragungspunkte sind, die dazu ausgelegt sind, mit einem Endgerät UE unter Verwendung eines oder mehrerer Sektoren über eine Luft-Schnittstelle in einem Zugangsnetzwerk zu kommunizieren, zum:
Empfangen (102) einer vom Endgerät UE gesendeten Uplink-Information durch die Basisstation;
Konfigurieren (103) eines ersten Satzes und/oder eines zweiten Satzes der Übertragungspunkte durch die Basisstation für das UE basierend auf der Uplink-Information; und
Herstellen, wenn der erste Satz oder der zweite Satz konfiguriert ist, mehrerer Verbindungen zwischen den im ersten Satz oder dem zweiten Satz umfassten Übertragungspunkten und dem UE, wobei
wenn der erste Satz und der zweite Satz konfiguriert sind, der erste Satz mindestens zwei Übertragungspunkte umfasst und der zweite Satz ein Teilsatz des ersten Satzes ist, wobei ein Übertragungspunkt im ersten Satz ein Übertragungspunkt ist, dessen gemessene Signalstärke größer oder gleich einem ersten Schwellenwert ist, ein Übertragungspunkt im zweiten Satz ein Übertragungspunkt ist, dessen gemessene Signalstärke größer oder gleich einem zweiten Schwellenwert ist, und der zweite Schwellenwert größer als der erste Schwellenwert ist;
wobei jeder im zweiten Satz umfasste Übertragungspunkt aus dem ersten Satz aktiviert oder deaktiviert werden kann;
wenn der im zweiten Satz umfasste Übertragungspunkt den zweiten Schwellenwert nicht erfüllt, ein Übertragungspunkt, der sich im ersten Satz und außerhalb des zweiten Satzes befindet und den zweiten Schwellenwert erfüllt, zum zweiten Satz hinzugefügt wird; wobei:
(a) die Uplink-Information ein Downlink-Messergebnis ist, das sich in mindestens einem Downlink-Messergebnis befindet und größer als der erste Schwellenwert oder der zweite Schwellenwert ist; oder
(b) die Uplink-Information mindestens eine Übertragungspunktkennung ist und die mindestens eine Übertragungspunktkennung eine einem Downlink-Messergebnis entsprechende Übertragungspunktkennung ist; oder
(c) die Uplink-Information spezifisch ein vom UE gesendetes Uplink-Signal ist, und das Uplink-Signal mindestens eines der folgenden Signale ist: ein Uplink-Sondierungssignal, ein Uplink-Sondierungsreferenzsignal, ein Uplink-Sequenzcode oder eine Präambel;
wobei
vor dem Empfangen einer vom Endgerät UE gesendeten Uplink-Information durch eine Basisstation, das Verfahren ferner umfasst:
Mitteilen eines Uplink-Übertragungs-Subframe oder eines Uplink-Übertragungs-Subframesatzes des Uplink-Signals durch die Basisstation unter Verwendung von Radio-Resource-Control(RRC)-Signalisierung;
vor dem Mitteilen eines Uplink-Übertragungs-Subframe oder eines Uplink-Übertragungs-Subframesatzes des Uplink-Signals durch die Basisstation unter Verwendung von RRC-Signalisierung, das Verfahren ferner umfasst:
Koordinieren oder Vorkonfigurieren des Uplink-Übertragungs-Subframe oder des Uplink-Übertragungs-Subframesatzes durch die Basisstation unter Verwendung einer Schnittstelle zwischen Basisstationen.

2. Verfahren gemäß Anspruch 1, wobei
der im ersten Satz umfasste Übertragungspunkt eine erste Zelle bildet und die erste Zelle ein erster Cluster, eine erste virtuelle Zelle oder eine erste Superzelle ist;
wobei
ein in der ersten Zelle umfasster primärer Übertragungspunkt fest oder variabel ist; die erste Zelle eine entsprechende Zellenkennung aufweist, und wenn die erste Zelle der erste Cluster, die erste virtuelle Zelle oder die erste Superzelle ist, die der ersten Zelle entsprechende Zellenkennung eine Cluster-Kennung, eine Virtuelle-Zelle-Kennung oder eine Superzellenkennung ist.

3. Verfahren gemäß einem der Ansprüche 1 bis 2, wobei
der im zweiten Satz umfasste Übertragungspunkt eine zweite Zelle bildet und die zweite Zelle ein zweiter Cluster, eine zweite virtuelle Zelle oder eine zweite Superzelle ist;
wobei
ein in der zweiten Zelle umfasster primärer Übertragungspunkt sich mit einer Bewegung des UE ändert;
die zweite Zelle eine entsprechende Zellenkennung aufweist, und wenn die zweite Zelle der zweite Cluster, die zweite virtuelle Zelle oder die zweite Superzelle ist, die der zweiten Zelle entsprechende Zellenkennung eine Cluster-Kennung, eine Virtuelle-Zelle-Kennung oder eine Superzellenkennung ist.

4. Verfahren gemäß einem der Ansprüche 1 bis 3, wobei sich der zweite Satz in einem Mehrfach-RRC-Verbindungsmodus befindet und mindestens zwei Übertragungspunkte im zweiten Satz RRC-Verbindungen zum UE herstellen; oder
sich der zweite Satz in einem Einzel-RRC-Verbindungsmodus befindet und ein Übertragungspunkt im zweiten Satz eine RRC-Verbindung zum UE herstellt; oder sich der zweite Satz in einem semistatischen Modus befindet und sich der Übertragungspunkt im zweiten Satz im ersten Satz auf semistatische Weise ändert;
wobei
vor dem Empfangen einer vom Endgerät UE gesendeten Uplink-Information durch eine Basisstation, das Verfahren ferner umfasst:
Senden des ersten Schwellenwerts oder des zweiten Schwellenwerts an das UE durch die Basisstation unter Verwendung von Konfigurationssignalisierung;
das Empfangen einer vom Endgerät UE gesendeten Uplink-Information durch eine Basisstation umfasst:
Empfangen einer vom Endgerät UE gesendeten Uplink-Information eines Übertragungspunkts, der den ersten Schwellenwert oder den zweiten Schwellenwert erfüllt, durch die Basisstation.

5. Verfahren gemäß einem der Ansprüche 1 bis 4, wobei nach dem Konfigurieren eines ersten Satzes und/oder eines zweiten Satzes für das UE basierend auf der Uplink-Information durch die Basisstation, das Verfahren ferner umfasst:
Senden von Informationen über den ersten Satz und/oder den zweiten Satz an das UE durch die Basisstation unter Verwendung von Radio-Resource-Control(RRC)-Signalisierung; und/oder
Senden einer Aktivierungs- oder Deaktivierungsinformation des zweiten Satzes an das UE durch die Basisstation unter Verwendung von Media-Access-Control(MAC)-Signalisierung;
ferner umfassend:
Senden einer Mehrfachverbindungskonfigurationsinformation an das UE durch die Basisstation unter Verwendung von RRC-Signalisierung, um das UE anzuweisen, eine Mehrfachverbindungskollaboration durchzuführen; wobei
die Mehrfachverbindungskollaboration mindestens eine der folgenden Kollaborationen umfasst:
Leistungskollaboration, Direktzugriffskollaboration und Leistungsreserve-Kollaboration;
ferner umfassend:
wenn eine inaktive Verbindung in den mehreren Verbindungen aktiviert wird, Bewirken, durch die Basisstation unter Verwendung von Media-Access-Control(MAC)-Signalisierung über eine vorausgehend aktivierte Verbindung, dass die aktuell aktivierte Verbindung eine Uplink-Übertragung durchführt, wobei die Uplink-Übertragung mindestens eine der folgenden Übertragungen umfasst: Direktzugriffsübertragung, Disponiererfordernisübertragung, Sondierungsreferenzsignalübertragung und Pufferzustandsberichtübertragung.

6. Basisstation, die verwendet wird als Master-Knoten in einem ultradichten Netzwerk mit in einem Hotspot-Bereich in großem Umfang eingesetzten Kleinzellen, wobei die Kleinzellen Übertragungspunkte sind, die dazu ausgelegt sind, mit einem Endgerät UE unter Verwendung eines oder mehrerer Sektoren über eine Luft-Schnittstelle in einem Zugangsnetzwerk zu kommunizieren, wobei die Basisstation entweder umfasst:
(a) ein zum Empfangen von durch das Endgerät UE gesendeten Uplink-Informationen ausgelegtes Transceiver-Modul (11); und ein zum Durchführen des Verfahrens gemäß einem der Ansprüche 1 bis 5 ausgelegtes Verarbeitungsmodul (12); oder
(b) einen Prozessor (31), einen Speicher (32), eine Kommunikationsschnittstelle (33) und einen Systembus (34), wobei der Speicher (32), die Kommunikationsschnittstelle (33) und der Prozessor (31) verbunden sind und unter Verwendung des Systembusses (33) eine gegenseitige Kommunikation implementieren, wobei der Speicher (32) ausgelegt ist, eine Computerausführungsanweisung zu speichern, die Kommunikationsschnittstelle (33) ausgelegt ist, mit einer anderen Vorrichtung zu kommunizieren, der Prozessor (31) ausgelegt ist, die Computerausführungsanweisung auszuführen, und die Computerausführungsanweisung so ausgelegt ist, dass, wenn der Prozessor (31) die Computerausführungsanweisung ausführt, die Basisstation (300) die Schritte des Verfahrens nach einem der Ansprüche 1 bis 5 durchführt.

## Revendications

1. Procédé de configuration de liaisons multiples comprenant l'utilisation d'une station de base comme nœud maître dans un réseau ultra-dense comportant des petites cellules déployées sur une grande échelle dans une zone de points d'accès sans fil, les petites cellules étant des points de transmission configurés pour communiquer avec un équipement utilisateur UE en utilisant un ou plusieurs secteurs sur une interface hertzienne dans un réseau d'accès, pour :
la réception (102), par la station de base, d'informations de liaison montante envoyées par l'UE,
la configuration (103) des points de transmission et, par la station de base, d'un premier ensemble et/ou d'un second ensemble pour l'équipement utilisateur UE sur la base des informations de liaison montante, et
lorsque le premier ensemble ou que le second ensemble est configuré, l'établissement d'une pluralité de liaisons entre les points de transmission compris dans le premier ensemble ou le second ensemble et l'UE, dans lequel
lorsque le premier ensemble et le second ensemble sont configurés, le premier ensemble comprend au moins deux points de transmission et le second ensemble est un sous-ensemble du premier ensemble, un point de transmission dans le premier ensemble étant un point de transmission dont l'intensité de signal mesurée est supérieure ou égale à un premier seuil, un point de transmission dans le second ensemble étant un point de transmission dont l'intensité de signal mesurée est supérieure ou égale à un second seuil, et le second seuil étant supérieur au premier seuil,
dans lequel chaque point de transmission compris dans le second ensemble peut être activé ou désactivé à partir du premier ensemble,
lorsque le point de transmission compris dans le second ensemble ne satisfait pas au second seuil, un point de transmission qui se trouve dans le premier ensemble et à l'extérieur du second ensemble, et qui satisfait au second seuil, est ajouté au second ensemble, dans lequel
(a) les informations de liaison montante représentent un résultat de mesure de liaison descendante qui se trouve dans au moins un résultat de mesure de liaison descendante et qui est supérieur au premier seuil ou au second seuil, ou
(b) les informations de liaison montante représentent au moins un identificateur de point de transmission, et l'au moins un identificateur de point de transmission est un identificateur de point de transmission correspondant à un résultat de mesure de liaison descendante, ou
(c) les informations de liaison montante sont en particulier un signal de liaison montante envoyé par l'UE, et le signal de liaison montante est au moins l'un des signaux suivants : un signal de sondage de liaison montante, un signal de référence de sondage de liaison montante, un code de séquence de liaison montante ou un préambule,
dans lequel
le procédé comprend en outre, avant la réception, par une station de base, d'informations de liaison montante envoyées par l'équipement utilisateur UE :
la notification, par la station de base, d'une sous-trame de transmission de liaison montante ou d'un ensemble de sous-trames de transmission de liaison montante du signal de liaison montante en utilisant une signalisation à commande de ressources radio RRC,
le procédé comprend en outre, avant la notification, par la station de base, d'une sous-trame de transmission de liaison montante ou d'un ensemble de sous-trames de transmission de liaison montante du signal de liaison montante en utilisant une signalisation à commande RRC :
la coordination ou la pré-configuration, par la station de base, de la sous-trame de transmission de liaison montante ou de l'ensemble de sous-trames de transmission de liaison montante en utilisant une interface entre stations de base.

2. Procédé selon la revendication 1, dans lequel :
le point de transmission compris dans le premier ensemble constitue une première cellule, et la première cellule est une première grappe, une première cellule virtuelle ou une première super cellule,
dans lequel
un point de transmission primaire compris dans la première cellule est fixe ou variable,
la première cellule comporte un identificateur correspondant de cellule, et lorsque la première cellule est la première grappe, la première cellule virtuelle ou la première super cellule, l'identificateur de cellule correspondant à la première cellule est un identificateur de grappe, un identificateur de cellule virtuelle ou un identificateur de super cellule.

3. Procédé selon l'une quelconque des revendications 1 et 2, dans lequel :
le point de transmission compris dans le second ensemble constitue une seconde cellule, et la seconde cellule est une seconde grappe, une seconde cellule virtuelle ou une seconde super cellule,
dans lequel
un point de transmission primaire compris dans la seconde cellule change avec un mouvement de l'UE,
la seconde cellule comporte un identificateur correspondant de cellule, et lorsque la seconde cellule est la seconde grappe, la seconde cellule virtuelle ou la seconde super cellule, l'identificateur de cellule correspondant à la seconde cellule est un identificateur de grappe, un identificateur de cellule virtuelle ou un identificateur de super cellule.

4. Procédé selon l'une quelconque des revendications 1 à 3, dans lequel :
le second ensemble se trouve dans un mode de liaison à commandes RRC multiples, et au moins deux points de transmission dans le second ensemble établissent des liaisons à commande RRC vers l'UE, ou
le second ensemble se trouve dans un mode de liaison à commande RRC unique, et un point de transmission dans le second ensemble établit une liaison à commande RRC vers l'UE, ou
le second ensemble se trouve dans un mode à demi-statique, et le point de transmission dans le second ensemble change dans le premier ensemble de manière à demi-statique,
dans lequel
le procédé comprend en outre, avant la réception par une station de base des informations de liaison montante envoyées par l'équipement utilisateur UE :
l'envoi, par la station de base, du premier seuil ou du second seuil à l'équipement utilisateur UE en utilisant une signalisation de configuration,
la réception, par une station de base, d'informations de liaison montante envoyées par l'UE comprend :
la réception, par la station de base, d'informations de liaison montante qui sont envoyées par l'UE et qui proviennent d'un point de transmission qui satisfait au premier seuil ou au second seuil.

5. Procédé selon l'une quelconque des revendications 1 à 4, dans lequel :
le procédé comprend en outre, après la configuration par la station de base d'un premier ensemble et/ou d'un second ensemble pour l'UE sur la base des informations de liaison montante :
l'envoi à l'UE, par la station de base, d'informations concernant le premier ensemble et/ou le second ensemble en utilisant une signalisation à commande de ressources radio RRC, et/ou
l'envoi à l'UE, par la station de base, d'informations d'activation ou de désactivation du second ensemble en utilisant une signalisation à commande d'accès au support MAC,
comprenant en outre :
l'envoi à l'UE, par la station de base, d'informations de configuration de liaisons multiples en utilisant une signalisation à commande RRC, afin d'ordonner à l'UE d'effectuer une collaboration à liaisons multiples,
dans lequel
la collaboration à liaisons multiples comprend au moins l'une des collaborations suivantes : une collaboration de puissance, une collaboration à accès aléatoire et une collaboration à marge de puissance,
comprenant en outre :
lorsqu'une liaison inactive de la pluralité de liaisons est activée : le déclenchement de la liaison actuellement activée, par la station de base en utilisant une signalisation à commande d'accès au support MAC sur une liaison précédemment activée, pour effectuer une transmission de liaison montante, la transmission de liaison montante comprenant au moins l'une des transmissions suivantes : une transmission à accès aléatoire, une transmission avec exigence de programmation, une transmission de signal de référence de sondage et une transmission à rapport d'état de mémoire tampon.

6. Station de base utilisée comme nœud maître dans un réseau ultra-dense comportant des petites cellules déployées sur une grande échelle dans une zone de points d'accès sans fil, les petites cellules étant des points de transmission configurés pour communiquer avec un équipement utilisateur UE en utilisant un ou plusieurs secteurs sur une interface hertzienne dans un réseau d'accès, la station de base incluant :
(a) soit un module émetteur récepteur (11) configuré pour recevoir des informations de liaison montante envoyées par un équipement utilisateur UE, ainsi qu'un module de traitement (12) configuré pour effectuer le procédé conforme à l'une quelconque des revendications 1 à 5,
(b) soit un processeur (31), une mémoire (32), une interface de communication (33) et un bus système (34), où la mémoire (32), l'interface de communication (33) et le processeur (31) sont reliés et mettent en œuvre une communication mutuelle en utilisant le bus système (33), la mémoire (32) étant configurée pour stocker des instructions d'exécution par ordinateur, l'interface de communication (33) étant configurée pour communiquer avec un autre dispositif, le processeur (31) étant configuré pour exécuter les instructions d'exécution par ordinateur, et les instructions d'exécution par ordinateur étant configurées de sorte que, lorsque le processeur (31) exécute les instructions d'exécution par ordinateur, la station de base (300) effectue les étapes du procédé conforme à l'une quelconque des revendications 1 à 5.
